# EUROPEAN PATENT SPECIFICATION

(11) **EP 2 768 326 B1**
(45) Date of publication and mention of the grant of the patent: **17.01.2018**
(21) Application number: 12781176.8
(22) Date of filing: 18.10.2012
(51) Int. Cl.: A23L 2/44, A23L 2/56, A23F 3/16, A23L 3/3463, A23L 3/3499, A23L 3/3508

(54) **PRESERVATIVE COMBINATION COMPRISING VANILLIN AND CINNAMIC ACID**
KONSERVIERUNGSMITTELKOMBINATIONEN ENTHALTEND VANILLIN UND ZIMTSÄURE
COMBINAISONS CONSERVATRICES COMPRENANT DE VANILLINE ET D'ACIDE CINNAMIQUE

(30) Priority: 18.10.2011 EP 11185613; 18.10.2011 US 201161548535 P
(43) Date of publication of application: 27.08.2014
(73) Proprietor: Purac Biochem bv, 4206 AC Gorinchem (NL)
(72) Inventor: HEINTZ, Eelco Anthonius Johannes, NL-4201 GP Gorinchem (NL); SAURABH, Kumar, Overland Park, Kansas 66210 (US)
(74) Representative: Nederlandsch Octrooibureau
(86) International application number: PCT/NL2012/050726
(87) International publication number: WO 2013/058651

(56) References cited:
- WO-A1-01/87095
- WO-A1-2011/029554
- WO-A2-2007/109804
- US-A- 6 042 861
- US-B1- 6 630 187
- DATABASE WPI Week 198438 Thomson Scientific, London, GB; AN 1984-234730 XP002667709, & JP 59 140868 A (TAKASAGO PERFUMERY CO LTD) 13 August 1984 (1984-08-13)
- DATABASE Chemical Abstracts, Chemi [Online] 26 August 1996 (1996-08-26), CERRUTTI P ET AL: "Inhibitory effects of vanillin on some food spoilage yeasts in laboratory media and fruit purees", XP002148560, retrieved from CHEMICAL Database accession no. 125-113126

## Description

### Field of the Invention

The present invention relates to a preservative system with a broad spectrum of applications. In particular, the invention uses a preservative system capable of protecting against spoilage by yeasts, especially in carbonated and/or juice containing beverages. The invention provides the use of the preservative system as well as beverages containing the preservative system, especially carbonated and/or juice containing beverages.

### Background of the Invention

Microbial spoilage of beverages is a significant concern in the beverage industry today. Beverages have varying degrees of sensitivity to microbiological spoilage depending on intrinsic factors of the beverage such as pH, nutrient content (e.g., juice, vitamin, or micronutrient content), carbonation level, Brix, water quality (e.g., alkalinity and/or hardness), and preservatives. Spoilage events occur when microorganisms are able to overcome the beverage's intrinsic factors and grow.

Microbiological spoilage can result from one or more yeasts, bacteria, and/or moulds. For example, yeasts and bacteria are capable of spoiling carbonated and non-carbonated beverages such as fruit drinks enhanced waters, etc.

The ability of yeasts and certain bacteria to grow anaerobically enables their growth in carbonated beverages. Typically, bacteria tend to produce off-flavors and odors with associated sedimentation. Spoilage by yeasts usually manifests itself as fermentation with gas and ethanol production, as well as sedimentation, off-flavors and odors, and loss of cloud or emulsion stability. Yeasts such as *Saccharomyces, Zygosaccharomyces, Candida, Dekkera spp.* and *Pichia* are often responsible for spoilage incidents in common beverages, both carbonated and non-carbonated.

Protection against microbiological spoilage of beverages can be achieved using chemical preservatives and/or processing techniques such as hot filling, tunnel pasteurization, ultra-high temperature treatment (UHT) or pasteurization followed by aseptic packaging, and/or pasteurization followed by chilling the beverage.

Current preservation systems for acidic, shelf-stable beverages rely on acidic preservatives, especially benzoic acid, benzoates, sorbic acid, sorbates and sulphite.

These preservatives can have an impact on the flavour and the use of these preservatives is restricted in many countries.

It has therefore often been attempted to reduce the amount of sorbic and/or benzoic acid necessary to achieve microbial stability. One such attempt involves the addition of naturally occurring and less potentially toxic agents such as oils of cinnamon and thyme.

US 6,042,861 teaches the use of cinnamic acid in the preservation of carbonated and non-carbonated tea based beverages, so as to achieve a reduction in the amount of sorbic and/or benzoic acid necessary to inhibit microbial growth. The combination of 0.40 g/l of potassium sorbate and 30 ppm cinnamic acid is tested in a still tea based beverage. The compositions of US 6,042,861 contain substantial amounts of an acidulant in order to achieve preservation stability.

WO01/87095 relates to beverages that contain a preservative system that contains 1 to 175 ppm cinnamic acid, 10 to 200 ppm sorbic acid or benzoic acid and at least one essential oil other than cinnamic acid. Minimising the concentration of sorbic and benzoic acid in this way enables one to prepare an ambient-stable beverage whilst avoiding the adverse effects that sorbic and benzoic acid can have on taste.

It is an object of the present invention to solve one or more of the aforementioned shortcomings of the existing methods of chemical preservation. It is a particular object of the present invention to provide a preservative system with an improved activity against yeasts in carbonated and/or juice containing beverages.

The present invention is as defined by the appended claims.

### Summary of the Invention

In accordance with the invention this objective is realized with the use of a preservative system comprising a combination of vanillin and cinnamate.

In experiments, the present inventors observed that binary combinations of vanillin and cinnamate were effective in inhibiting the growth of certain yeasts often associated with spoilage of carbonated and juice containing beverages, at dosages suitable for this kind of application.

The present invention, using a combination of vanillin and cinnamate accomplishes protection against yeast spoilage at acceptable sensory levels.

Hence the present invention provides beverages, relying on the combination of vanillin and cinnamate as well as applications of such preservation systems in beverages, especially carbonated and/or juice containing beverages.

### Detailed Description of the Invention

This invention uses a preservative system comprising (i) vanillin and (ii) cinnamic acid and/or a salt thereof.

Cinnamic acid (3-phenyl-2-propenoic acid) is well known as a food ingredient, which obtained FEMA-GRAS status in 1965. As will be understood by those skilled in the art, any soluble cinnamic acid salt may be used in accordance with the invention. Typically, the cinnamate is a water soluble salt of cinnamic acid. For convenience, the term `cinnamate' is used herein to refer to any substance containing the cinnamic acid anion, in particular to denote cinnamic acid and the salts thereof. Furthermore, a number of cinnamic acid derivatives are known and used in the food industry, including p-dimethylaminocinnamate, cinnamaldehyde, cinnamyl acetate, cinnamyl alcohol, cinnamyl benzoate, cinnamyl cinnamate, cinnamyl formate, cinnamyl isobutyrate, cinnamyl isovalerate and cinnamyl phenylacetate, which may also be referred to herein as 'cinnamate derivatives'. In a particularly preferred embodiment of the invention the preservative system comprises cinnamic acid and/or a cinnamic acid salt selected from the group of sodium cinnamate and potassium cinnamate. In a preferred embodiment, the preservative comprises potassium cinnamate.

In one preferred embodiment, the preservative system comprises cinnamate in an amount of less than 50 wt.% based on the total weight of the preservative system, preferably less than 45 wt.%, preferably less than 40 wt.%, preferably less than 35 wt.%, preferably less than 30 wt.%, preferably less than 25 wt.%, preferably less than 20 wt.%, preferably less than 15 wt.%, preferably less than 12 wt.%, preferably less than 11 wt.%, preferably less than 10 wt.%, based on the total weight of the preservative system.

In one preferred embodiment, the preservative system comprises cinnamate in an amount of more than 0.1 wt.%, based on the total weight of the preservative system, preferably more than 0.25 wt.%, preferably more than 0. 5 wt.%, preferably more than 1 wt.%, preferably more than 2.5 wt%, preferably more than 4 wt.%, preferably more than 5 wt%, preferably more than 6 wt.%, preferably more than 7 wt.%, preferably more than 8 wt.%, based on the total weight of the preservative system.

Vanillin (4-Hydroxy-3-methoxybenzaldehyde) is approved as a food additive by authorities world wide. Vanillin was given FEMA-GRAS status in 1965. Derivatives of vanillin such as methyl vanillin, ethyl vanillin and vanillin 2,3-butanediol acetal may also suitably used in accordance with this invention, although the use of vanillin is particularly preferred.

In one preferred embodiment, the preservative system comprises vanillin in an amount of less than 25 wt. % based on the total weight of the preservative system, preferably less than 20 wt. %, preferably less than 15 wt. %, preferably less than 12 wt. %, preferably less than wt. %, preferably less than 10 wt. %, preferably less than 9 wt. %, preferably less than 8 wt. %, preferably less than 7 wt. %, preferably less than 6 wt. %, preferably less than 5 wt. %, preferably less than 4 wt. %, preferably less than 3.5 wt. %, preferably less than 3 wt. %, based on the total weight of the preservative system.

In one preferred embodiment, the preservative system comprises vanillin in an amount of more than 0.025wt. %, based on the total weight of the preservative system, preferably more than 0.05 wt. %, preferably more than 0.1 wt. %, preferably more than 0.25 wt. %, preferably more than 0.5 wt.%, preferably more than 1 wt. %, preferably more than 1.5 wt%, preferably more than 2 wt. %, preferably more than 2.5 wt. %, based on the total weight of the preservative system.

In one preferred embodiment, the preservative system is characterized by a (molar) ratio of (i) vanillin : (ii) cinnamate of less than 10 (1.0:0. 1), preferably less than 4 (1.0:0.25), preferably less than 2 (1.0:0.5), e.g. around 1.75. In one preferred embodiment, the preservative system is characterized by a ratio of (i) : (ii) of more than 0.1 (1.0:10), preferably more than 0.5 (1.0:2), preferably more than 1 (1.0:1), preferably more than 1.25 (1.0:0.8), most preferably more than 1.5 (1.0:0.5).

The preservative system of the present invention can optionally include other preservatives. Weak acid preservatives are preferred for this purpose. As indicated in the foregoing however, an advantage of the present invention resides in the fact that the presence of other preservatives, especially synthetic preservatives such as benzoates and sorbates can be minimized or avoided altogether while achieving the desired level of microbial stability. The preservative system of the present invention typically contains no or only minor amounts of additional preservative agents, such as, in particular, benzoate and/or sorbate. In a particularly preferred embodiment of the invention the preservative system is essentially or completely free from preservative agents selected from the group of benzoates and sorbates.

In one embodiment of the invention the preservative composition further comprises a carrier material, the choice of which will largely depend on the physical form in which the preservative system is to be provided. The carrier material is typically used in any amount required to provide a product that has the desired properties relating to production, storage and dosing.

In one embodiment of the invention, a preservative system in the form of a free flowing powder or granulate, which may comprise a carrier material. In another preferred embodiment a free flowing powder is provided consisting essentially of the preservative combination. Such a free flowing powder may be obtained by combining the various components in an aqueous dispersion or solution followed by drying, e.g. spray-drying.

In another embodiment a liquid preservative system is provided comprising solution or dispersion of the above defined components in an aqueous phase, which for instance may be obtained by concentrating the aqueous dispersion or solution.

As discussed herein the present preservative system is capable of preventing and/or inhibiting the growth of, and/or killing of a micro-organism in a food system. This may be slowing or arresting a micro-organism, or by killing the micro-organism present on contact with the present composition. In a preferred aspect the microbicidal or microbiostatic effect is in respect of an organism associated with food spoilage or food borne disease, especially spoilage of carbonated and/or fruit juice containing beverages. In a preferred aspect the microbiocidal or microbiostatic effect is in respect of at least one, more preferably at least two, most preferably at least three organism selected from Yeasts, especially from the species of *Candida* (e.g. *C*. *krusei, C. parapsilosis, C. utilis, C. valida, C. albicans*)*, Dekkera* (e.g. *D. bruxellensis*)*, Debaryomyces* (e.g. *D. hansenii*), *Hanseniaspora* (e.g. *H. uvarum*) *Kluyveromyces* (e.g. *K. loctis*)*, Pichia* (*P. membranaefaciens*)*, Rhodosporidium, Rhodotorula* (*Rh mucilaginosa*)*, Saccharomyces* (e.g. *S. bayanus, S. boulardi, S. carlsbergensis, S. cerevisiae, S. exiguus, S. florentinus, S. unisporus*)*, Zygosaccharonmyces* (e.g. Z. *rouxii, Z baili*)*,* more preferably a yeast selected from *Candida, Saccharomyces and Zygosaccharomyces, most preferably from Candida albicans, Saccharomyces cerevisiae and Zygosaccharomyces baiii.*

A first aspect of the invention concerns a beverage comprising an effective amount of (i) vanillin and (ii) cinnamic acid and/or a salt thereof.

As used herein the term 'effective amount' refers to an amount sufficient to preserve the product to which the present preservative system is added, i.e. to keep the product from microbial spoilage. As commonly understood in the art, the definitions of the terms "preserve," "preservative," and "preservation" do not provide a standard time period for how long the thing to be preserved is kept from spoilage, decomposition, or discoloration. The time period for "preservation" can vary greatly depending on the subject matter. As used herein, the terms "preserve," "preservative," and "preservation" refer to the protection against spoilage of a product that is the result of the growth of spoilage microorganisms for a period of at least 1 weeks, preferably at least 2 weeks, preferably at least 5 weeks, preferably at least 10 weeks, preferably at least 15 weeks. This period is in keeping with the time required to transport a beverage product from location of manufacture, through distribution channels, into the hand of the consumer. Typically, the product is preserved under ambient conditions, which include the full range of temperatures experienced during storage, transport, and display (e.g., 0°C to 40°C, 10°C to 30°C, 20°C to 25°C) without limitation to the length of exposure to any given temperature. Absence of spoilage is noted by absence any evidence of growth of spoilage organisms (turbidity, viable count, direct microscopic count or other standard methods of enumeration) and by the absence of any discernable change in the product attributes that could be routinely attributed to metabolism of spoilage organisms.

As noted herein before, the present preservative system is particularly suited for beverages, especially carbonated beverages and/or juice containing beverages. Hence in a preferred embodiment an alimentary product as defined above is provided, which is selected from the group consisting of beverages, more preferably from the group of carbonated beverages and juice containing beverages. Some examples of carbonated beverages that may suitably be preserved using the present preservative system include cola beverages, flavored waters, tea based beverages, mineral drinks, vitamin waters, fruit juice-containing beverages, etc.

The beverage comprises vanillin in an amount of less than 500 ppm, preferably less than 450 ppm, preferably less than 425 ppm, preferably less than 400 ppm, preferably less than 375 ppm, preferably less than 350 ppm, preferably less than 340 ppm, preferably less than 330 ppm, preferably less than 325.

The beverage comprises vanillin in an amount of more than 200 ppm, preferably more than 250 ppm, preferably more than 275 ppm, preferably more than 300 ppm, preferably more than 325 ppm.

The beverage comprises cinnamate in an amount of less than 500 ppm, preferably less than 400 ppm, preferably less than 350 ppm, preferably less than ppm, preferably less than 300, preferably less than 275 ppm, preferably less than 250 ppm, preferably less than 225 ppm, preferably less than 210 ppm.

The beverage comprises cinnamate in an amount of more than 50 ppm, preferably more than 100 ppm, preferably more than 125 ppm, preferably more than 150 ppm, preferably more than 175 ppm, preferably more than 185 ppm, preferably more than 190 ppm, preferably more than 195 ppm, preferably more than 200 ppm.

The beverage as defined herein above is provided, which contains less than 10 ppm, more preferably less than 1 ppm and most preferably less than 0.5 ppm. This ensures that no negative taste effects are observed. In a particularly preferred embodiment of the invention the beverage is essentially or completely free from preservative agents selected from the group of benzoates and sorbates.

In one preferred embodiment of the invention, the beverage is a carbonated beverage.

Herein, the term "carbonated beverage" is any combination of water and ingredient which is intended for human consumption and which possesses more than 0.2 volumes of carbon dioxide. The term "volume of CO₂" is understood to mean a quantity of carbon dioxide absorbed into the liquid wherein one volume CO₂ is equal to 1.96 grams of carbon dioxide (CO₂) per liter of product (0.0455M) at 25 °C.

Such beverages may be supplemented with flavours, fruit juices, sweeteners, vitamins, nutrients, minerals, amino acids, etc.

Certain examples of the beverage product of the invention include (carbonated) tea- or fruit- based beverages, especially carbonated ice-teas and 'flavoured water beverages'.

The term "tea based beverage" describes a beverage that contains the solid extracts of leaf material from Camellia sinensis, Camellia assamica, or Aspalathus linearis. The tea may be added to the beverage in various forms including an extract, a concentrate, a powder or as granules. Without preservation, tea acts as a nutrient that enhances the potential for microbial spoilage, at low concentrations, such as 0.01 to 3%.

The term -"flavoured water" refers to a beverage essentially consisting of water with added natural or artificial flavors, herbs, and sweeteners. The flavoured water type beverages are usually low in calories, as compared to regular soft drinks, and are typically marketed as diet or light drinks. In many cases, flavored waters comprise fruits or fruit juices, in limited amounts, as a source of the vitamins, minerals and flavours.

Typically, beverages according to the present invention will possess a specified range of acidity. The invention typically can function at a pH within the range of 2-7. In one preferred embodiment of the invention, the pH is at least 2, preferably at least 2.5, preferably at least 2.75, preferably at least 3, preferably at least 3.2, preferably at least 3.3, preferably at least 3.4, preferably at least 3.5. In one preferred embodiment of the invention, the pH of the beverage is below 7, preferably below 6, preferably below 5.5, preferably below 5, preferably below 4.75, preferably below 4.6, preferably below 4.5. For highly acidic beverages, the invention is not limited by the type of acidulant employed in acidifying the product. Typically, in accordance with the present invention, acidulants may be inorganic acids, such as phosphoric acids, or organic acids, such as citric, malic, ascorbic, tartaric, lactic, gluconic, and succinic acid, fumaric acid. The various acids can be combined with salts of the same or different acids in order to manage pH or the buffer capacity of the beverage to a specified pH or range of pH. Virtually any organic acid salt can be used so long as it is edible and does not provide an off-flavor. The choice of salt or salt mixture will be determined by the solubility and the taste. Citrate, malate and ascorbate yield ingestible complexes whose flavors are judged to be quite acceptable, particularly in fruit juice beverages. Tartaric acid is acceptable, particularly in grape juice beverages, as is lactic acid. Longer-chain fatty acids may be used but can affect flavor and water solubility. For essentially all purposes, the malate, gluconate, citrate and ascorbate and lactate moieties are preferred.

As stated before, a preferred embodiment of the invention concerns juice-containing beverages. In a particularly preferred embodiment of the invention the beverage product comprises fruit juice in an amount of less than 10 % (v/v). It is furthermore preferred that the beverage product comprises fruit juice in an amount of more than 5 % v/v. By way of example, juice can be obtained from the fruit of apple, cranberry, pear, peach, plum, apricot, nectarine, grape, cherry, currant, raspberry, gooseberry, blackberry, blueberry, strawberry, lemon, orange, grapefruit, passionfruit, mandarin, mirabelle, tomato, lettuce, celery, spinach, cabbage, watercress, dandelion, rhubarb, carrot, beet, cucumber, pineapple, custard- apple, coconut, pomegranate, guava, kiwi, mango, papaya, watermelon, Io han guo, cantaloupe, pineapple, banana or banana puree, lemon, mango, papaya, lime, tangerine, and mixtures thereof. Preferred juices are the citrus juices, and most preferred are the non-citrus juices, apple, pear, cranberry, strawberry, grape, papaya, mango and cherry. Any juice can be used to make the beverage of this invention.

The preservation function of the present invention in beverage formulations typically is not affected by the type of sweeteners present therein. The sweetener may be any sweetener commonly employed for use in beverages. Sweeteners suitable for use in various embodiments of the beverages disclosed here include nutritive and non-nutritive, natural and artificial or synthetic sweeteners. The sweetener can include a monosaccharide or a disaccharide. Peptides possessing sweet taste are also permitted. The most commonly employed saccharides include sucrose, fructose, dextrose, maltose and lactose and invert sugar. Mixtures of these sugars can be used. Other natural carbohydrates can be used if less or more sweetness is desired. Suitable non-nutritive sweeteners and combinations of such sweeteners include e.g. aspartame, neotame, and alitame, and non-peptide based sweeteners, for example, sodium saccharin, calcium saccharin, acesulfame potassium, sodium cyclamate, calcium cyclamate, neohesperidin dihydrochalcone, and sucralose.

Beverage products typically contain flavors of various types and nature. In general, the beverage preservative system according to the present invention is compatible with beverages formulated to contain artificial flavours, natural flavors, botanical flavors, fruit flavors, aqueous essences, etc. The preservation function of the present invention is typically is not affected by such components. The term "botanical flavor" refers to flavors derived from parts of a plant other than the fruit. Also included within the term "botanical flavor" are synthetically prepared flavors made to simulate botanical flavors derived from natural sources. Botanical flavors can be derived from natural sources such as essential oils and extracts, or can be synthetically prepared. As used herein, the term "aqueous essence" refers to the water soluble aroma and flavor materials which are derived from fruit juices.

Beverage products typically can be fortified with added nutrients, vitamins, minerals, trace elements and the like. Such additional components typically do not affect the preservation function of the invention. Non-limiting examples of such additional components that may typically be present in the beverages of the invention include vitamins A, B1, B2, B6, B12, C, D, E, K, Biotin, Folic Acid, Pantothenic Acid, Niacin, calcium, magnesium, iron, zinc, potassium, selenium, copper, manganese, etc.

The preservative system used in the invention may also function in beverage products of the meal substitute type, in which case substantial amounts of protein, carbohydrate, dietary fibers and/or lipids are typically present.

Another aspect of the invention concerns the use of the preservative system, for the preservation of an alimentary product, especially a beverage as defined previously. Yet another aspect of the invention concerns a method of preserving an alimentary product, especially a beverage as defined previously, comprising the step of adding to said product the preservative system. Preferred embodiments concern uses and methods, wherein the preservation comprises inactivation of yeast and/or inhibiting yeast growth. In particularly preferred embodiments the yeast is a yeast selected from the group consisting of *Candida* (e.g. *C*. *krusei, C. parapsilosis, C. utilis, C. valida, C. albicans*)*, Dekkera* (e.g. *D. bruxellensis*)*, Debaryomyces* (e.g. *D. hansenii*)*, Hanseniaspora* (e.g. *H. uvarum*) *Kluyveromyces* (e.g. *K. loctis*)*, Pichia* (*P. membranaefaciens*)*, Rhodosporidium, Rhodotorula* (*Rh mucilaginosa*)*, Saccharomyces* (e.g. *S. bayanus, S. boulardi, S. carlsbergensis, S. cerevisiae, S. exiguus, S. florentinus, S. unisporus*)*, Zygosaccharonmyces* (e.g. *Z*. *rouxii, Z baili*)*.* The details and preferred embodiments of these aspects of the invention will be readily understood by those skilled in the art based on the foregoing detailed descriptions of the preservative system and products containing them.

Thus, the invention has been described by reference to certain embodiments discussed above. It will be recognized that these embodiments are susceptible to various modifications and alternative forms well known to those of skill in the art.

Many modifications in addition to those described above may be made to the structures and techniques described herein without departing from the spirit and scope of the invention. Accordingly, although specific embodiments have been described, these are examples only and are not limiting upon the scope of the invention.

Furthermore, for a proper understanding of this document and in its claims, it is to be understood that the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the **e**lement is present, unless the context clearly requires that there be one and only one of the elements. The indefinite article "a" or "an" thus usually means "at least one".

All patent and literature references cited in the present specification are hereby incorporated by reference in their entirety.

The following examples are offered for illustrative purposes only, and are not intended to limit the scope of the present invention in any way

### Examples

The efficacy of cinnamate and vanillin in preserving against yeast was screened in a model beverage separate and in combination. After the screening several taste sessions were organized between resulting in potential preservative formulations to be tested in application.

Application experiments were set up using a model beverage. First the combined efficacy of both components was tested against 3 different yeasts (see table 1), known for their beverage spoiling qualities. These tests were carried out in sterile 96-well microtiter plates. Sterile matrix was prepared (see recipe table 2) with increasing quantities of two different inhibitors. The concentrations of each inhibitor were presented in 8 equal concentration steps that ranged from 0 to 1 - 2 times the (estimated) MIC value of particular yeast for a particular inhibitor resulting in 64 different media. 200 µl of each medium was transferred to a panel of a sterile 96-well microtiter plate. Completed well plates were stored at 4 °C until further use. For the inoculation of this test 5µl of a 72 to 84 hours grown culture (Inoculation 10³⁻⁴ per ml) was used.

**Table 1: tested microorganisms**

| **organism** | **source** |
|---|---|
| *Candida albicans* | Plant environment |
| *Saccharomyces cerevisiae* | Plant environment |
| *Zygosaccharomyces bailii* | Orange concentrate |

**Table 2: recipe of the model drink**

| **5% juice model drink, pH ∼3.5** | |
|---|---|
| Water (Vittel) | 965 g |
| Citric acid (Sigma) | 2.2 g |
| Sucrose | 40 g |
| Flavour (Givaudan) | 0.35 g |
| Apple juice concentrate (Gargill) | 8.28 g |

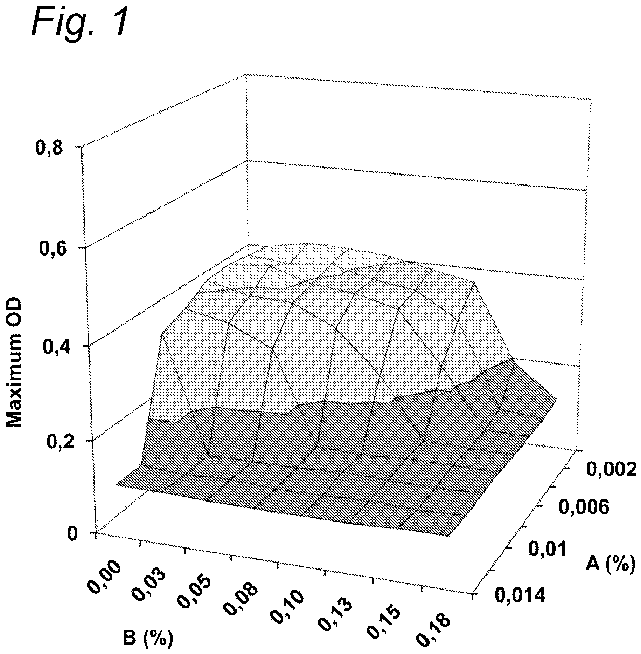

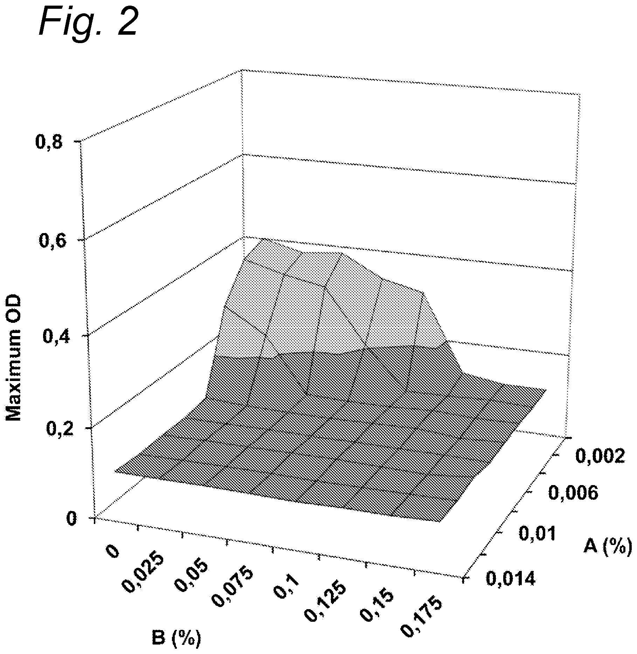

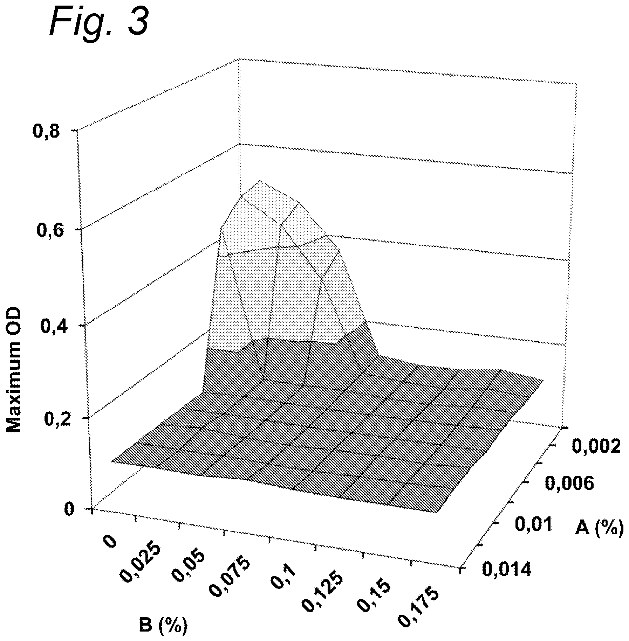

The data was obtained via OD measurement and the processing of the data was done in excel. Figures 1-3 shows the results obtained in the form of 3D graphs (Figure 1: *Zygosaccharomyces bailii;* Figure 2: *Saccharomyces cerevisiae;* Figure 3: *Candida albicans*)*.* Points in the graph represent the optical density of the corresponding well (Z axis). The X and Y axes show increasing percentage of cinnamate and vanillin (A and B respectively).

As can be inferred from these results, the model drink containing KCIN and vanillin were protected against yeast spoilage. Amounts of vanillin and cinnamate needed to accomplish this proved to be within the limits considered organoleptically acceptable in taste experiments.

Partial inhibition of the growth of molds could be observed in comparison to the control without preservatives.

## Claims

1. Beverage comprising an effective amount of (i) vanillin and (ii) cinnamic acid or a salt thereof, wherein the beverage comprises vanillin in an amount within the range of 200-500 ppm; and cinnamate in an amount within the range of 50-400 ppm; and less than 10 ppm of preservative agents selected from the group of sorbates and benzoates.

2. Beverage according to claim 1, wherein the beverage has a pH of at least 2, preferably at least 3, most preferably at least 3.2.

3. Use of a preservative system comprising (i) more than 0.1 wt% of vanillin and (ii) more than 0.1 wt% of cinnamic acid or a salt thereof, the preservative system being free from preservative agents selected from the group of benzoates and sorbates, for the preservation of a beverage.

4. Use of a preservative system comprising (i) more than 0.1 wt% of vanillin and (ii) more than 0.1 wt% of cinnamic acid or a salt thereof, the preservative system being free from preservative agents selected from the group of benzoates and sorbates for the inactivation of yeast in a beverage.

5. Use of a preservative system comprising (i) more than 0.1 wt% of vanillin and (ii) more than 0.1 wt% of cinnamic acid or a salt thereof, the preservative system being free from preservative agents selected from the group of benzoates and sorbates for inhibiting yeast growth in a beverage.

6. Use according to claim 4 or 5, wherein the yeast is selected from the group of *Candida albicans, Saccharomyces cerevisiae and Zygosaccharomyces baiii.*

7. Use according to any of claims 3 to 6, wherein the preservative composition comprises vanillin in an amount within the range of 1-10 wt%.

8. Use according to any of claims 3 to 7, wherein the preservative composition comprises cinnamate in an amount within the range of 5-50 wt%

9. Use according to any of claims 3 to 8, wherein in the preservative composition the ratio of (i) : (ii) is within the range of 1.0 : 1.0 - 1.0 : 0.5.

## Patentansprüche

1. Getränk umfassend eine effektive Menge an (i) Vanillin und (ii) Zimtsäure oder ein Salz davon, wobei das Getränk umfasst Vanillin in einer Menge innerhalb des Bereichs von 200-500 ppm; und Cinnamat in einer Menge innerhalb des Bereichs von 50-400 ppm; und weniger als 10 ppm von Konservierungsmitteln, ausgewählt aus der Gruppe von Sorbaten und Benzoaten.

2. Getränk nach Anspruch 1, wobei das Getränk einen pH von zumindest 2 bevorzugt zumindest 3, am meisten bevorzugt zumindest 3,2 aufweist.

3. Verwendung eines Konservierungssystems, umfassend (i) mehr als 0,1 Gewichts-% von Vanillin und (ii) mehr als 0,1 Gewichts-% von Zimtsäure oder einem Salz davon, das Konservierungssystem ist frei von Konservierungsmitteln, ausgewählt aus der Gruppe von Benzoaten und Sorbaten, für die Konservierung eines Getränks.

4. Verwendung eines Konservierungssystems, umfassend (i) mehr als 0,1 Gewichts-% von Vanillin und (ii) mehr als 0,1 Gewichts-% von Zimtsäure oder einem Salz davon, das Konservierungssystem ist frei von Konservierungsmitteln, ausgewählt aus der Gruppe von Benzoaten und Sorbaten, für die Inaktivierung von Hefe in einem Getränk.

5. Verwendung eines Konservierungssystems, umfassend (i) mehr als 0,1 Gewichts-% von Vanillin und (ii) mehr als 0,1 Gewichts-% von Zimtsäure oder einem Salz davon, das Konservierungssystem ist frei von Konservierungsmitteln, ausgewählt aus der Gruppe von Benzoaten und Sorbaten, zum Inhibieren von Hefewachstum in einem Getränk.

6. Verwendung nach Anspruch 4 oder 5, wobei die Hefe ausgewählt ist aus der Gruppe von *Candida albicans, Saccharomyces cerevisiae und Zygosaccharomyces baiii.*

7. Verwendung nach einem der Ansprüche 3 bis 6, wobei die Konservierungszusammensetzung Vanillin in einer Menge innerhalb des Bereichs von 1-10 Gewichts-% umfasst.

8. Verwendung nach einem der Ansprüche 3 bis 7, wobei die Konservierungszusammensetzung Cinnamat in einer Menge innerhalb des Bereichs von 5-50 Gewichts-% umfasst.

9. Verwendung nach einem der Ansprüche 3 bis 8, wobei in der Konservierungszusammensetzung das Verhältnis von (i) : (ii) innerhalb des Bereichs von 1,0 : 1,0 - 1,0 : 0,5 ist.

## Revendications

1. Boisson comprenant une quantité efficace (i) de vanilline et (ii) d'acide cinnamique ou d'un sel de celui-ci, dans laquelle la boisson comprend de la vanilline dans une quantité comprise entre 200 et 500 ppm ; et du cinnamate dans une quantité comprise entre 50 et 400 ppm ; et moins de 10 ppm d'agents conservateurs choisis dans le groupe des sorbates et des benzoates.

2. Boisson selon la revendication 1, dans laquelle la boisson présente un pH d'au moins 2, de préférence d'au moins 3, le plus préférablement d'au moins 3,2.

3. Utilisation d'un système conservateur comprenant (i) plus de 0,1 % en poids de vanilline et (ii) plus de 0,1 % en poids d'acide cinnamique ou d'un sel de celui-ci, le système conservateur ne contenant pas d'agents conservateurs choisis dans le groupe des benzoates et des sorbates, pour la conservation d'une boisson.

4. Utilisation d'un système conservateur comprenant (i) plus de 0,1 % en poids de vanilline et (ii) plus de 0,1 % en poids d'acide cinnamique ou d'un sel de celui-ci, le système conservateur ne contenant pas d'agents conservateurs choisis dans le groupe des benzoates et des sorbates, pour la désactivation de levure dans une boisson.

5. Utilisation d'un système conservateur comprenant (i) plus de 0,1 % en poids de vanilline et (ii) plus de 0,1 % en poids d'acide cinnamique ou d'un sel de celui-ci, le système conservateur ne contenant pas d'agents conservateurs choisis dans le groupe des benzoates et des sorbates, pour inhiber la croissance de levure dans une boisson.

6. Utilisation selon la revendication 4 ou 5, dans laquelle la levure est choisie dans le groupe des *Candida albicans, Saccharomyces cerevisiae* et *Zygosaccharomyces baiii.*

7. Utilisation selon l'une quelconque des revendications 3 à 6, dans laquelle la composition conservatrice comprend de la vanilline dans une quantité comprise entre 1 et 10 % en poids.

8. Utilisation selon l'une quelconque des revendications 3 à 7, dans laquelle la composition conservatrice comprend du cinnamate dans une quantité comprise entre 5 et 50 % en poids.

9. Utilisation selon l'une quelconque des revendications 3 à 8, dans laquelle, dans la composition conservatrice, le rapport (i) : (ii) est compris entre 1,0 : 1,0 et 1,0 : 0,5.
